# EUROPEAN PATENT APPLICATION

(11) **EP 1 530 078 A2**
(43) Date of publication of application: **11.05.2005**
(21) Application number: 04105600.3
(22) Date of filing: 08.11.2004
(51) Int. Cl.: G03B 21/62

(54) **Rear projection screen**

(30) Priority: 06.11.2003 BE 200300602
(71) Applicant: Kantoorinrichting Stulens, N.V., 3500 Hasselt (BE)
(72) Inventor: Stulens, Gert, 3500 Hasselt (BE)
(74) Representative: Callewaert, Jean

(57) **Abstract**

Rear projection screen having a projection side and an observation side with at least two transparent glass plates (4,5) which are connected to each other by a transparent plastic film (6) situated between these glass plates (4,5), whereby a first glass plate (4) is situated on a projection side of the screen (1) and has a smooth surface on this projection side, whereas a second glass plate (5) is provided on an observation side of this screen (1) and has a diffuse surface (7) on this side.

## Description

The invention concerns a rear projection screen with a projection side and an observation side comprising at least two transparent glass plates in between which is provided a transparent plastic film which is connected to the corresponding surface of the glass plates, whereby a first glass plate is situated on the projection side of the screen and has a smooth surface on this projection side, whereas a second glass plate is provided on the observation side of this screen.

Such projection screens have already been described in documents US 3 527 519 and US 3 779 630. These screens, which are known as such, are disadvantageous, however, in that it is not possible to obtain very sharp images. Further, these screens always have what are called sparkles of light, which has for a result that the image is not clearly visible. The screen also has what is called a "hot spot", formed of a location on the screen which is clearer than the other part of the screen.

In order to remedy these problems, several solutions have already been suggested. Thus, projection screens have been developed in the past in which for example Fresnel-lenses were implemented, as described in US 6 502 942 and EP 1 288 708, or whereby use was made of small spherical glass particles, embedded in a matrix, as described for example in US 6 466 368.

However, these known rear projection screens are relatively expensive and complex to manufacture, and their light output is relatively limited. Thus, these older screens must practically always be used in a room which is at least darkened somewhat in order to obtain an image that is sufficiently clear.

Moreover, the existing rear projection screens have as an additional disadvantage that they only provide a distinct and clear image when an observer is situated almost right in front of the screen. When looking at the screen at a small angle, the light intensity of the observed image is insufficient, and disturbing reflections from ambient light often intervene.

The invention aims to remedy the above-mentioned disadvantages by providing a rear projection screen having a very large light transmission without what is called a hot spot being observed. Moreover, the observed light intensity is sufficiently large, so that even by daylight and sunny weather, very clear images are observed on the screen, even at a small sharp angle in relation to the screen.

To this aim, the observation side of the aforesaid second glass plate has a diffuse surface.

Practically, said plastic film mainly consists at least of polyvinyl butyral.

In an advantageous manner, said plastic film has a thickness between 0.05 mm and 1 mm. The thickness of this plastic film is preferably in the order of magnitude of 0.38 mm.

According to a preferred embodiment of the rear projection screen according to the invention, said glass plates have a thickness between 1 mm and 15 mm and, preferably, the thickness of each of these glass plates is almost 3 mm.

For visible light, the light transmission T₁ from the projection side to the observation side of the rear projection screen, according to an interesting embodiment of the invention, is larger than the light transmission T₂ from the observation side to the projection side.

According to a special embodiment of the rear projection screen according to the invention, said plastic foil has a light transmission which is at least equal to 70% for visible light.

According to a specific embodiment of the rear projection screen according to the invention, the transmission of visible light from the projection side to the observation side of the screen is at least equal to 62 %.

More particularly, the transmission of light having a wavelength situated between 415 nm and 685 nm from the projection side to the observation side of the rear projection screen is at least 70 %, and preferably at least 75 %.

Other particularities and advantages of the invention will appear from the following description of a few special embodiments of the invention; this description is given as an example only and does not restrict the scope of the claimed protection in any way; the figures of reference used hereafter refer to the accompanying figures.

Figure 1 is a schematic side view of a rear projection screen according to the invention.

Figure 2 is a curve representing the light transmission of a polyvinyl butyral foil as a function of the wavelength of the light.

Figure 3 is a curve representing the light transmission through the rear projection screen according to the invention, as a function of the wavelength of the light for two types of glass.

Figure 4 is a curve representing the course of the reflection factor as a function of the wavelength of the light for the same rear projection screen and for the same types of glass.

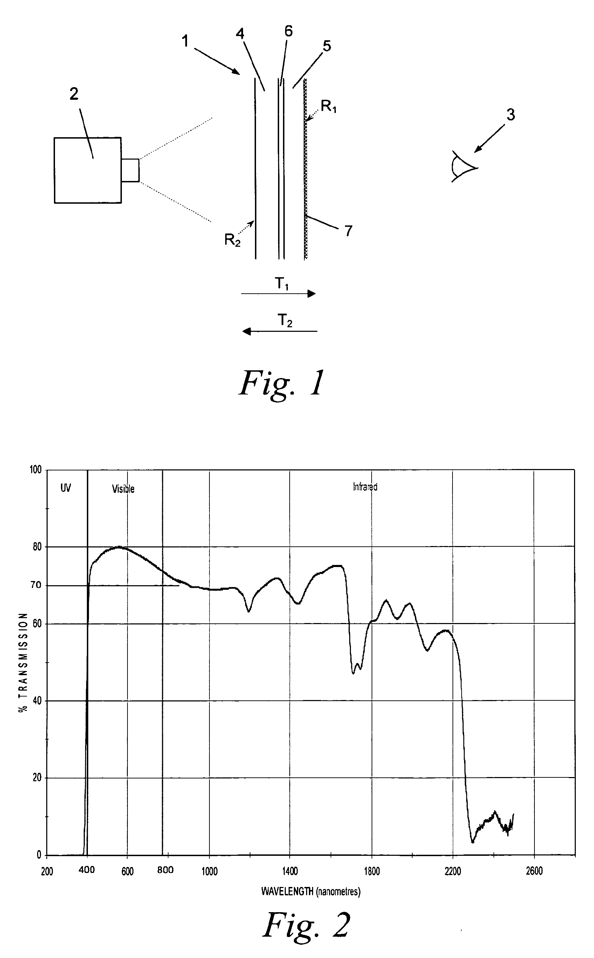

The invention generally concerns what is called a rear projection screen 1 as represented in figure 1. On such a screen 1 is projected, by means of a light source, more particularly a projector 2, an image onto the screen 1 via the projection side of the latter. The projected image can then be observed by a person 3, situated on the other side of the screen, in particular on the observation side thereof.

The rear projection screen 1 has two parallel transparent glass plates 4 and 5 in between which has been provided a transparent plastic film 6. Thus, the screen 1 forms a layered glass plate whereby the first glass plate 4 is fixed to the second glass plate 5 by means of said plastic film 6.

The glass plates are preferably made of what is called clear "float glass" with a light transmission that is as high as possible.

An average composition in percentage by weight of conventional float glass is represented in the following table 1.

**Table 1:**

| *average composition of float glass* | | | | |
|---|---|---|---|---|
| SiO₂ | 73.08 % | | Na₂O | 13.68 % |
| Al₂O₃ | 0.11 % | | K₂O | 0.02 % |
| CaO | 8.94 % | | Fe₂O₃ | 0.12 % |
| MgO | 3.88 % | | SO₃ | 0.23 % |

Although float glass having such a composition can be used in the rear projection screen according to the invention, considerably better results are obtained when extra clear glass is used. When for example the amount of Fe₂O₃ is lowered to for example less than 0.12 %, or preferably less than 0.05 %, the formed image will be much clearer and thus better observable by daylight.

Such very clear types of glass are described among others in patent documents US 2003/0114291 A1, US 6 610 622 B1 and US 5 030 594.

The first glass plate 4 consists for example of clear float glass which is marketed under the brand name "UltraWhite" by the company Luxguard or under the brand name "Eurowhite" by the company Euroglas. These glass plates have, for visible light, a light transmission in the order of magnitude of minimally 90 % for glass plates with a thickness up to 10 mm. The light reflection on the surface of these glass plates is in the order of magnitude of 8 %.

The second glass plate 5 has, on the observation side of the rear projection screen 1, a diffuse surface 7 which makes sure, on the one hand, that no annoying reflections occur on the observation side of the screen 1, and on the other side it also promotes the image formation.

The diffuse surface 7 is obtained according to techniques known as such by for example chemically etching or sandblasting the corresponding side of the glass plate 5. A diffuse coating or a plastic foil can possibly be provided on the surface of the glass plate 5 in order to realise the diffuse surface 7.

Such satinized glass plates with a diffuse surface 7 are marketed for example by the company Saint-Gobain under the brand name "Diamant" or by the Italian company Omnidecor.

The light transmission of such a satinized glass plate having a thickness of 4 mm amounts to 87.5 %, whereas the transmission of a satinized glass plate having a thickness of 6 mm amounts to 84.4 %. When the satinized glass plate is 6 mm thick and is made of extra clear glass having a very low Fe₂O₃ content, the light transmission amounts to 89 %.

Surprisingly, it was found that a clear, sharp and fine image was obtained on the rear projection screen 1 when said plastic film 6 is made of a polyvinyl butyral foil. The use of such a polyvinyl butyral foil in layered glass is already known and is described for example in patent documents US 2003/0148114 A1 and US 2003/0012964 A1.

The thickness of the polyvinyl butyral foil 6 is preferably situated between 0.05 mm and 1 mm. Good results were obtained when the thickness of this foil amounts to 0.25 mm to 0.8 mm. The thickness of this foil is preferably in the order of magnitude of 0.38 mm. The light transmission for visible light of the latter foil is higher than 70 % and, for example, smaller than or equal to 81 %. The curve of figure 2 represents the light transmission of the polyvinyl butyral foil 6 as a function of the wavelength of the light.

The thickness of the glass plates 4 and 5 is preferably larger than 1 mm and smaller than 10 mm. Very good results were obtained when the glass plates 4 and 5 have a thickness between 2 and 4 mm.

According to a preferred embodiment of the invention, the light transmission T₁ of the rear projection screen for visible light is smaller from the projection side to the observation side of the screen than the transmission T₂, in the opposite sense, from the observation side to the projection side.

This makes sure, in particular, that an image is projected on the rear projection screen 1 which can be very clearly and precisely observed on the observation side of the screen.

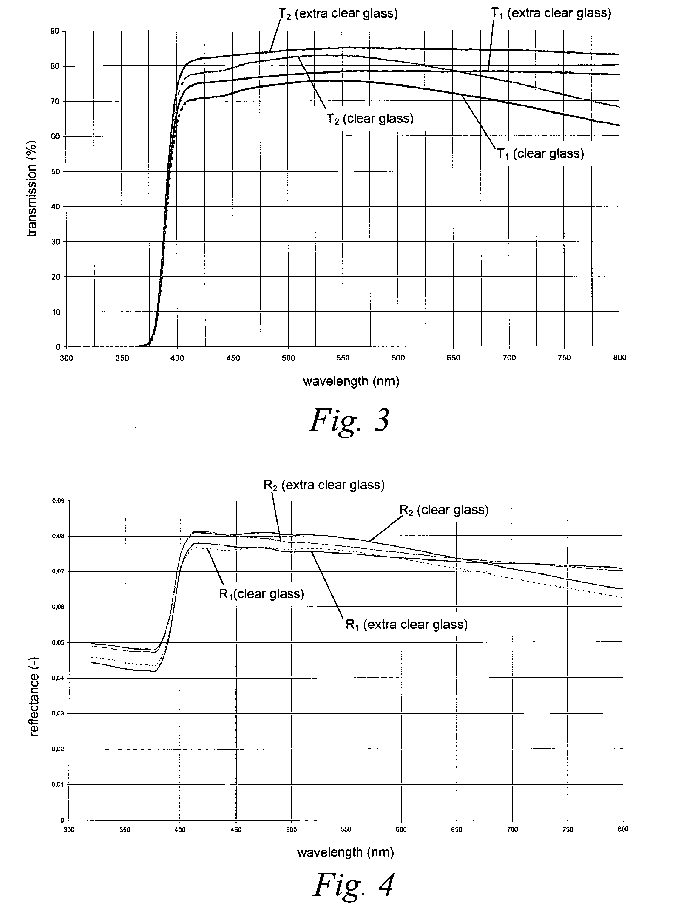

The values that were measured for the transmission of visible light for a rear projection screen according to the invention, whose glass plates 4 and 5 have a thickness of practically 3 mm, whereas the polyvinyl butyral foil has a thickness of 0.38 mm, are represented in figure 3. Table 2 gives these transmission values for certain wavelengths of the light.

**Table 2:**

| *light transmission of the rear projection screen for two glass compositions* | | | | |
|---|---|---|---|---|
| | clear glass (Fe₂O₃ ≤ 0.12 % by weight) | | extra clear glass (Fe₂O₃ ≤ 0.05 % by weight) | |
| λ (nm) | T₁ (%) | T₂ (%) | T₁ (%) | T₂ (%) |
| 400 | 62.65 | 69.18 | 66.02 | 72.32 |
| 415 | 70.29 | 77.37 | 74.36 | 81.28 |
| 430 | 70.91 | 78.09 | 75.21 | 82.18 |
| 500 | 75.00 | 82.26 | 77.45 | 84.29 |
| 550 | 75.67 | 82.79 | 78.23 | 84.92 |
| 600 | 74.43 | 81.20 | 78.32 | 84.81 |
| 650 | 72.12 | 78.49 | 78.19 | 84.45 |
| 670 | 71.08 | 77.29 | 78.28 | 84.40 |
| 685 | 70.17 | 76.31 | 78.22 | 84.30 |
| 700 | 69.28 | 75.32 | 78.21 | 84.27 |

These transmission values were measured on the basis of an incident light beam, perpendicular to the surface of the rear projection screen 1, whereby the amount of passing light is measured on the other side of the screen after it has fallen on an integrating sphere.

As can be clearly derived from the curve, the light output, and thus the clarity of a projected image, is better for a rear projection screen 1 containing glass plates 4 and 5 of what is called 'extra clear glass' with a Fe₂O₃ content which is lower than 0.05 % by weight than for the same rear projection screen whereby glass plates were used made of 'clear glass' with a Fe₂O₃ content which is lower than 0.12 % by weight and higher than 0.05 % by weight.

However, both types of glass produce an image which is considerably finer and clearer than in the case of the existing rear projection screens.

For a rear projection screen 1 whose glass plates 4 and 5 are made of 'clear glass', the transmission T₁ of visible light from the projection side to the observation side is at least equal to 62 %, whereas for a screen with glass plates made of 'extra clear glass', this amounts to at least 66 %. For light having a wavelength between 415 nm and 685 nm, these transmission values are minimally 70% and 75% respectively.

Further, the side of said second glass plate 5, which is connected to said plastic film 6, can also be provided with a diffuse surface by chemically etching this side, for example. For it was found that, when both sides of the second glass plate 5 have a diffuse surface, a very sharp image is obtained. However, in such a case the best results are obtained, as far as the clarity of the projected image is concerned, when the incident light on the surface situated on the observation side is diffused less than that on the other side of the glass plate 5 which is connected to the polyvinyl butyral foil 6.

Figure 4 represents a curve with the measured course of the reflection factor as a function of the wavelength of the light for the same rear projection screen 1 as that whose light transmission is represented in figure 3, for two identical types of glass, namely 'clear glass' and 'extra clear glass'. The curves which are indicated with R₁ hereby concern the reflection factor of the surface of the rear projection screen 1 situated on the observation side thereof, whereas the curves with the indication R₂ concern the reflection factor of the surface of the rear projection screen 1 situated on the projection side thereof.

Thus is obtained a rear projection screen 1 rendering a very sharp and clear image, whereby moreover no nuisance is caused due to the presence of what are called sparkles on the screen. Moreover, the phenomenon of the presence of what is called a hot spot on the screen practically does not occur.

Also, an image can be viewed at a very sharp angle without the observed image becoming unsharp or being not sufficiently clear. Thus, an observer looking at the screen at a sharp angle of for example 20° can still observe a sharp, clear and precise image without any annoying reflections occurring. Moreover, an image projected on the screen is very clear, so that it is even very well visible by daylight.

Further, a rear projection screen 1 according to the invention was made, composed of two glass plates 4 and 5 each having a thickness of almost 12 mm. These glass plates 4 and 5 are fixed to each other by means of a plastic film 6 made of polyvinyl butyral. This plastic film has a thickness of almost 1.5 mm and it was formed by providing four successive polyvinyl butyral foils having a thickness of 0.38 mm between both glass plates 4 and 5. The use of a plastic film having such a thickness makes it possible to absorb small unevennesses which may be present in the surface of the hardened glass plates 4 and 5.

When a rear projection screen is thus composed with relatively thick glass plates of hardened clear glass, a screen is obtained which, even when it has a very large surface, is self-supporting. A few bore holes may possibly be provided in the screen so as to suspend it vertically onto a construction, for example.

As the rear projection screen is composed of glass plates connected to each other and is thus relatively stiff, this screen is very suitable to be used as what is called a touch screen. In such a case, the image screen of a computer is represented for example via a projector on the screen. A speaker thus representing images on the screen by means of a computer can point at certain projected objects, for example with a pen, to draw the attention of his audience onto them. The position of the pen in relation to the screen is hereby detected with a sensor which is mounted for example on the edge of the screen. The position of the pen is then processed by means of the used computer, such that a marking is almost immediately projected on the position where the pen is situated, so that it seems as if one is writing or drawing with the pen on the screen.

It should be mentioned that the use of rear projection screens known according to the state of the art, when used as a touch screen, causes different problems. The existing screens either produce an image which is not sufficiently clear, or they are made of plastic such that, when being touched with a pen, they bend somewhat, which makes a precise positioning of the pen in relation to the screen very difficult or impossible.

Naturally, the invention is by no means limited to the above-described embodiments of the rear projection screen represented in the accompanying drawings. Thus, the screen must not necessarily be flat, but it may have for example a certain curvature and thus be composed of curved glass plates.

It is also possible that the glass plates 4 and 5 which are part of the rear projection screen are made of layered glass which is very clear.

## Claims

1. Rear projection screen having a projection side and an observation side with at least two transparent glass plates (4,5) which are connected to each other by a transparent plastic film (6) situated between these glass plates (4,5), whereby a first glass plate (4) is situated on a projection side of the screen (1) and has a smooth surface on this projection side, whereas a second glass plate (5) is provided on an observation side of this screen (1), **characterised in that** said second glass plate (5) has a diffuse surface (7) on the observation side of the rear projection screen (1).

2. Rear projection screen according to claim 1, **characterised in that** said plastic film (6) is at least mainly composed of polyvinyl butyral.

3. Rear projection screen according to claim 1 or 2, **characterised in that** said plastic film (6) has a thickness between 0.05 mm and 2 mm, and preferably between 0.05 mm and 1 mm.

4. Rear projection screen according to any one of claims 1 to 3, **characterised in that** said plastic film (6) has a thickness between 0.25 mm and 0.8 mm, and preferably is in the order of magnitude of 0.38 mm.

5. Rear projection screen according to any one of claims 1 to 4, **characterised in that** said glass plates (4,5) have a thickness between 1 mm and 15 mm.

6. Rear projection screen according to any one of claims 1 to 5, **characterised in that** said glass plates (4,5) have a thickness between 2 mm and 4 mm, and preferably in the order of magnitude of 3 mm.

7. Rear projection screen according to any one of claims 1 to 6, **characterised in that**, for visible light, the transmission T₁ from the projection side to the observation side is smaller than the light transmission T₂ from the observation side to the projection side.

8. Rear projection screen according to any one of claims 1 to 7, **characterised in that** said plastic foil (6) has a light transmission which is at least equal to 70% for visible light.

9. Rear projection screen according to any one of claims 1 to 8, **characterised in that** the transmission T₁ of visible light from the projection side to the observation side is at least equal to 62 %.

10. Rear projection screen according to any one of claims 1 to 9, **characterised in that** the transmission T₁ of light having a wavelength situated between 415 nm and 685 nm from the projection side to the observation side amounts to at least 70 %, and preferably to at least 75 %.

11. Rear projection screen according to any one of claims 1 to 10, **characterised in that** said second glass plate (5) has a diffuse surface on the side which is connected to said plastic film (6).

12. Rear projection screen according to any one of claims 1 to 11, **characterised in that** said glass plates (4,5) have a light transmission of at least 90% for glass plates having a thickness of up to 10 mm.

13. Rear projection screen according to any one of claims 1 to 11, **characterised in that** said glass plates (4,5) contain less than 0.12 % by weight of Fe₂O₃, and preferably less than 0.05 % by weight.
